# DEMANDE DE BREVET EUROPEEN

(11) **EP 1 905 565 A1**
(43) Date de publication de la demande: **02.04.2008**
(21) Numéro de dépôt: 07291150.6
(22) Date de dépôt: 26.09.2007
(51) Int. Cl.: B29C 44/12, B29C 44/34

(54) **Procédé de réalisation d'un composant structurel avec un dégazage périphérique**

(30) Priorité: 29.09.2006 FR 0608594
(71) Demandeur: Centre d'etude et de recherche pour l'automobile (CERA), 51100 Reims (FR)
(72) Inventeur: Brillon, Eric, 51140 Treslon (FR)
(74) Mandataire: Sayettat, Julien Christian

(57) **Abrégé**

L'invention concerne un procédé de réalisation d'un composant structurel pour véhicule automobile comprenant les étapes suivantes : prévoir deux peaux (1,2), au moins l'une desdites peaux étant poreuse en présentant, sur au moins une portion de son épaisseur, à partir de sa face interne (3), une porosité aux gaz, et une porosité partielle à la mousse, de sorte à permettre une pénétration partielle de mousse dans l'épaisseur de ladite portion dans les conditions d'un moulage par injection-réaction (RIM) ; mettre en place lesdites peaux contre les parois d'un moule de moulage RIM comprenant une cuve (4) et un couvercle (5), ledit moule étant agencé de sorte à présenter, lorsqu'il est fermé, un espace (6) entre ladite cuve et ledit couvercle sur au moins une partie de sa périphérie ; injecter un mélange (7) précurseur de mousse rigide entre lesdites peaux ; après expansion de la mousse, et évacuation des gaz de réaction au travers de ladite portion poreuse et dudit espace, démouler le composant obtenu.

## Description

L'invention concerne un procédé de réalisation d'un composant structurel pour véhicule automobile, un moule destiné à réaliser un tel composant et un composant réalisé par un tel procédé.

Il est connu, notamment du document EP-1 555 105, un procédé de réalisation d'un composant structurel pour véhicule automobile comprenant les étapes suivantes :
• prévoir deux peaux, au moins l'une desdites peaux étant partiellement poreuse à la mousse, de sorte à permettre une pénétration partielle de mousse dans son épaisseur dans les conditions d'un moulage par injection-réaction (RIM), et permettant une évacuation des gaz de réaction au travers de son épaisseur,
• mettre en place lesdites peaux contre les parois d'un moule de moulage RIM pourvu d'évents d'évacuation des gaz évacués au travers de ladite peau poreuse,
• injecter un mélange précurseur de mousse rigide entre lesdites peaux,
• après expansion de la mousse, démouler le composant obtenu.

L'imprégnation partielle de la peau poreuse par la mousse permet notamment une rigidification de la pièce par effet de « croûtage ».

En outre, la mousse ne traversant pas totalement la peau, la face visible de ladite peau est exempte de mousse et peut donc former une face d'aspect satisfaisant.

Par ailleurs, la mousse n'entrant pas en contact avec le moule, il n'est pas requis l'utilisation d'agents de démoulage coûteux et d'utilisation complexe.

Néanmoins, un tel procédé requiert une porosité de la peau aux gaz dans toute son épaisseur, ce qui est incompatible avec des peaux que l'on souhaite étanches sur leur face d'aspect, ceci par exemple pour des considérations de facilité de nettoyage.

En outre, la création d'évents dans le moule en complexifie la réalisation.

L'invention a pour but de pallier ces inconvénients.

A cet effet, et selon un premier aspect, l'invention propose un procédé de réalisation d'un composant structurel pour véhicule automobile comprenant les étapes suivantes :
• prévoir deux peaux, au moins l'une desdites peaux étant poreuse en présentant, sur au moins une portion de son épaisseur, à partir de sa face interne, une porosité aux gaz, et une porosité partielle à la mousse, de sorte à permettre une pénétration partielle de mousse dans l'épaisseur de ladite portion dans les conditions d'un moulage par injection-réaction (RIM),
• mettre en place lesdites peaux contre les parois d'un moule de moulage RIM comprenant une cuve et un couvercle, ledit moule étant agencé de sorte à présenter, lorsqu'il est fermé, un espace entre ladite cuve et ledit couvercle sur au moins une partie de sa périphérie,
• injecter un mélange précurseur de mousse rigide, par exemple de polyuréthanne, entre lesdites peaux,
• après expansion de la mousse, et évacuation des gaz de réaction au travers de ladite portion poreuse et dudit espace, démouler le composant obtenu.

Ainsi, l'évacuation des gaz se fait par l'espace prévu en périphérie du moule. Lorsque la mousse pénètre partiellement dans la portion poreuse, au cours de son expansion, les gaz s'évacuent au sein de ladite portion non pénétrée par la mousse vers ledit espace, ce qui permet notamment d'éviter la formation de bulles.

Avec un tel agencement, il est possible de disposer d'une peau partiellement poreuse dont la surface d'aspect est étanche.

En outre, le moule est de conception simplifiée puisque non pourvu d'évents.

Selon un deuxième aspect, l'invention propose un moule de mise en oeuvre d'un tel procédé.

Selon un troisième aspect, l'invention propose un composant structurel réalisé par un tel procédé. Un tel composant est par exemple une tablette de recouvrement de bagages ou un faux plancher.

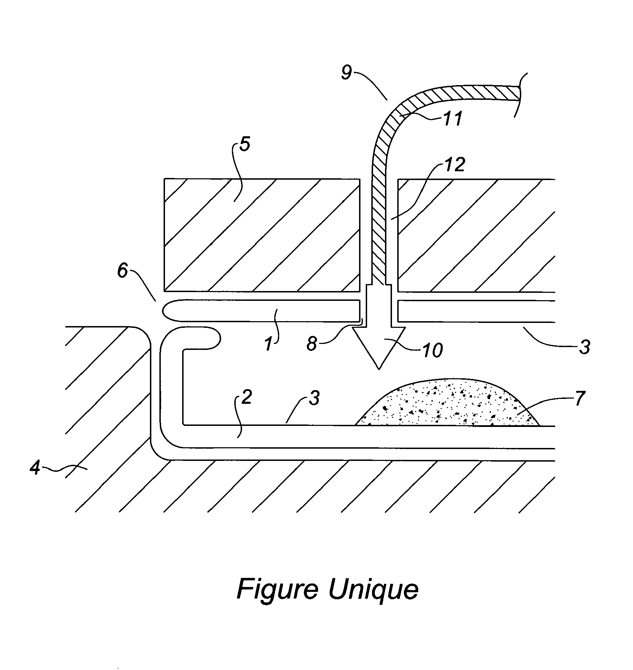

D'autres particularités et avantages de l'invention apparaîtront dans la description qui suit, faite en référence à la figure jointe qui est une représentation schématique partielle en coupe d'un moule dans lequel sont disposées des peaux, après injection du mélange précurseur de mousse, en vue de réaliser un composant structurel selon un mode de réalisation de l'invention.

En référence à la figure, on décrit à présent un procédé de réalisation d'un composant structurel pour véhicule automobile comprenant les étapes suivantes :
• prévoir deux peaux 1,2, au moins l'une desdites peaux étant poreuse en présentant, sur au moins une portion de son épaisseur, à partir de sa face interne 3, une porosité aux gaz, et une porosité partielle à la mousse, de sorte à permettre une pénétration partielle de mousse dans l'épaisseur de ladite portion dans les conditions d'un moulage par injection-réaction (RIM),
• mettre en place lesdites peaux contre les parois d'un moule de moulage RIM comprenant une cuve 4 et un couvercle 5, ledit moule étant agencé de sorte à présenter, lorsqu'il est fermé, un espace 6 entre ladite cuve et ledit couvercle sur au moins une partie de sa périphérie,
• injecter un mélange 7 précurseur de mousse rigide, par exemple de polyuréthanne, entre lesdites peaux,
• après expansion de la mousse, et évacuation des gaz de réaction au travers de ladite portion poreuse et dudit espace, démouler le composant obtenu.

Selon une réalisation, le procédé prévoit en outre une étape de mise en forme tridimensionnelle, par exemple par thermoformage, d'au moins une des peaux 1,2 avant leur mise en place dans le moule.

Selon une réalisation, la peau 1,2 poreuse est disposée contre le couvercle du moule.

En variante, la peau 1,2 poreuse est disposée contre la cuve du moule.

En autre variante, les deux peaux 1,2 sont poreuses. La mousse pénétrant dans les deux peaux, on réalise une rigidification de ces dernières et un effet de poutre renforcé.

Selon la réalisation représentée, le procédé prévoit de réaliser au moins un orifice 8 dans une des peaux, d'insérer un organe fonctionnel 9 - ici un cordon de relevage d'une tablette de recouvrement à bagages, ladite tablette formant le composant - dans ledit orifice avant injection du mélange 7 précurseur de mousse de sorte qu'une partie d'ancrage 10 dudit organe soit surmoulé par la mousse, la partie libre 11 - formée ici du lacet de cordon - dudit organe traversant le moule au travers d'un canal 12 prévu à cet effet, ledit canal permettant en outre une évacuation d'une partie des gaz de réaction.

Un moule de moulage RIM destiné à être utilisé dans un tel procédé comprend une cuve 4 et un couvercle 5, ledit moule étant agencé de sorte à présenter, lorsqu'il est fermé, un espace 6 entre ladite cuve et ledit couvercle sur au moins une partie de sa périphérie, ledit espace étant destiné à permettre l'évacuation des gaz de réaction.

Le moule représenté comprend en outre au moins un canal 12 d'évacuation de gaz et de traversée d'un organe 9 fonctionnel.

Dans un composant structurel réalisé par un tel procédé - par exemple une tablette arrière - la portion poreuse peut s'étendre sur toute l'épaisseur de la peau 1,2 poreuse, une face d'aspect du composant étant formée par une face de ladite portion. La peau 1,2 peut par exemple être formée d'un feutre.

En variante, la peau 1,2 poreuse peut présenter une couche d'aspect étanche, par exemple sous forme d'une feuille de matière plastique, et une sous-couche poreuse formant ladite portion poreuse, par exemple sous la forme d'une mousse solidarisée à ladite couche d'aspect, par exemple par collage.

En autre variante, la peau 1,2 poreuse peut présenter une couche d'aspect poreuse, par exemple à base de textile, et une sous-couche poreuse formant ladite portion poreuse, par exemple à base de mousse.

Un composant structurel obtenu par un tel procédé peut comprendre au moins un organe 9 fonctionnel - par exemple un cordon - s'étendant de part et d'autre d'un orifice 8 prévu dans une des peaux 1,2, une partie d'ancrage 10 dudit organe étant surmoulée par la mousse et une partie libre 11 étant saillante.

## Revendications

1. Procédé de réalisation d'un composant structurel pour véhicule automobile comprenant les étapes suivantes :
• prévoir deux peaux (1,2), au moins l'une desdites peaux étant poreuse en présentant, sur au moins une portion de son épaisseur, à partir de sa face interne (3), une porosité aux gaz, et une porosité partielle à la mousse, de sorte à permettre une pénétration partielle de mousse dans l'épaisseur de ladite portion dans les conditions d'un moulage par injection-réaction (RIM),
• mettre en place lesdites peaux contre les parois d'un moule de moulage RIM comprenant une cuve (4) et un couvercle (5), ledit moule étant agencé de sorte à présenter, lorsqu'il est fermé, un espace (6) entre ladite cuve et ledit couvercle sur au moins une partie de sa périphérie,
• injecter un mélange (7) précurseur de mousse rigide entre lesdites peaux,
• après expansion de la mousse, et évacuation des gaz de réaction au travers de ladite portion poreuse et dudit espace, démouler le composant obtenu.

2. Procédé selon la revendication 1, ledit procédé prévoyant en outre une étape de mise en forme tridimensionnelle d'au moins une des peaux (1,2) avant leur mise en place dans le moule.

3. Procédé selon l'une quelconque des revendications 1 ou 2, prévoyant en outre de réaliser au moins un orifice (8) dans une des peaux (1,2), d'insérer un organe fonctionnel (9) dans ledit orifice avant injection du mélange (7) précurseur de mousse de sorte qu'une partie d'ancrage (10) dudit organe soit surmoulé par la mousse, la partie libre (11) dudit organe traversant le moule au travers d'un canal (12) prévu à cet effet, ledit canal permettant en outre une évacuation d'une partie des gaz de réaction.

4. Moule de moulage RIM destiné à être utilisé dans un procédé selon l'une quelconque des revendications 1 à 3, ledit moule comprenant une cuve (4) et un couvercle (5), ledit moule étant agencé de sorte à présenter, lorsqu'il est fermé, un espace (6) entre ladite cuve et ledit couvercle sur au moins une partie de sa périphérie, ledit espace étant destiné à permettre l'évacuation des gaz de réaction, ledit moule comprenant en outre au moins un canal (12) d'évacuation de gaz et de traversée d'un organe fonctionnel (9).

5. Composant structurel réalisé par un procédé selon l'une quelconque des revendications 1 à 3, la portion poreuse s'étendant sur toute l'épaisseur de la peau (1,2) poreuse.

6. Composant structurel réalisé par un procédé selon l'une quelconque des revendications 1 à 3, la peau (1,2) poreuse présentant une couche d'aspect étanche et une sous-couche poreuse formant la portion poreuse.

7. Composant structurel réalisé par un procédé selon l'une quelconque des revendications 1 à 3, la peau (1,2) poreuse présentant une couche d'aspect poreuse et une sous-couche poreuse formant ladite portion poreuse.

8. Composant structurel selon l'une quelconque des revendications 5 à 7, ledit composant comprenant au moins un organe fonctionnel (9) s'étendant de part et d'autre d'un orifice (8) prévu dans une des peaux (1,2), une partie d'ancrage (10) dudit organe étant surmoulée par la mousse et une partie libre (11) étant saillante.
